# EUROPEAN PATENT APPLICATION

(11) **EP 4 703 189 A1**
(43) Date of publication of application: **04.03.2026**
(21) Application number: 25199196.4
(22) Date of filing: 29.08.2025
(51) Int. Cl.: B60L 58/10, B60H 1/32, B60L 58/12, B60L 58/18, B60L 58/21, H01M 10/48, B60L 3/00, B60L 3/12, B60L 50/64, B60L 50/60, B60L 58/19

(54) **DISTRIBUTED BATTERY MANAGEMENT FOR TRANSPORT CLIMATE CONTROL**

(30) Priority: 30.08.2024 US 202418821520
(71) Applicant: Thermo King LLC, Minneapolis, MN 55420 (US)
(72) Inventor: STROUD, Adam, Minneapolis, Minnesota, 55420 (US)
(74) Representative: Haseltine Lake Kempner LLP

(57) **Abstract**

A power system for a transport climate control system (TCS) includes a distributed battery system that has multiple battery modules separately attached to a chassis. Separately, battery modules are each configured to activate upon activation of a load, exchange self-identifying information with the other battery modules to identify a lead battery module, and exchange internal and performance-related data with the other battery modules. The lead battery module is configured to identify as the lead battery module to the load, transmit internal and performance-related data of the multiple battery modules to the load, and coordinate collective power distribution from one or more battery modules.

## Description

### TECHNICAL FIELD

This disclosure generally relates to the provision of power and data for a transport climate control system (TCS).

### BACKGROUND

A transport climate control system (TCS) is generally used to control an internal condition *(e.g.,* temperature, humidity, air quality, and the like) within a transport unit, *e.g.,* a container (such as a container on a flat car, an intermodal container, *etc.),* truck, trailer, box car, or other similar transport unit. Climate controlled transport units are commonly used to transport perishable items such as produce, frozen foods, and meat products. Climate controlled transport units are also used to transport passengers between locations.

### SUMMARY

This disclosure generally relates to the provision of power and data for a transport climate control system (TCS).

The embodiments described and/or recited herein are generally directed to the provision of power and data for a transport climate control system (TCS). In some embodiments, a climate control circuit is provided that includes a main heat transfer circuit and a chiller heat transfer circuit.

The embodiments described and recited herein include, but are not limited to, a distributed battery system that allows the power architecture of the transport unit, particularly the TCS, to be separated in separate blocks that are capable of being spread out along the trailer body in multiple configurations and/or orientations.

As stated above, transport climate control may require accessories that are interspersed beneath a transport unit.

However, a distributed battery management system (BMS), as described and recited herein, allows each battery node to be smaller than the whole, while simultaneously self-containing all safety features. Accordingly, the non-limiting example embodiments described and recited herein include, and pertain to, spatially distributed appropriately sized battery blocks that are capable of being installed according to customized specifications, thus allowing room for the aforementioned competing accessories, while collectively providing at least the required power for the TCS.

That is, the presently described and recited BMS provides TCS and/or transport unit with one or more battery modules without having to compromise on the provision of other required, or at least highly desired, transport climate control accessories beneath the transport container or otherwise attached to a corresponding chassis.

In one example embodiment, a distributed power system includes one or more battery modules that are attached to a chassis. Separately, the multiple battery modules are each configured to activate upon activation of a load, exchange self-identifying information with the other battery modules to identify a lead battery module, and exchange internal and performance-related data with the other battery modules. The lead battery module is configured to identify as the lead battery module to the load, transmit internal and performance-related data of the multiple battery modules to the load, and coordinate collective power distribution from the plural battery modules.

In accordance with at least one other example embodiment, a battery module includes a receptor to a private network connection, including but not limited to a controller area network (CAN) bus. Self-identifying information is transmitted to at least one other battery module via the private network connection, identifying information from the at least one other battery module is received via the private network connection, internal and performance-related data regarding the battery module is transmitted to at least one other battery module via the private network connection, and internal and performance-related data regarding the at least one other battery module is received via the private network connection. The battery module also includes a receptor to a public network connection, including but not limited to a public CAN bus.

The embodiments described herein may integrate large format batteries that are suitable for sustaining power to transport climate control systems within transport units such as trucks, trailers, containers, etc. Further, the embodiments described herein facilitate the mounting of batteries above a certain height on vehicles to avoid being subject to high standards for durability and crash resistance, thereby decreasing the weight of such batteries relative to the power and energy such batteries are able to store and supply.

### BRIEF DESCRIPTION OF THE DRAWINGS

In the detailed description that follows, embodiments are described as illustrations only since various changes and modifications will become apparent to those skilled in the art from the following detailed description. The use of the same reference numbers in different figures indicates similar or identical items.
FIG. 1A is a side view of an example climate-controlled van for which at least one non-limiting example of distributed battery management for transport climate control may be implemented, as described and recited herein.
FIG. 1B is a side view of an example of a climate-controlled straight truck for which at least one non-limiting example of distributed battery management for transport climate control may be implemented, as described and recited herein.
FIG. 1C is a side perspective view of an example of a climate-controlled trailer and a tractor for which at least one non-limiting example of distributed battery management for transport climate control may be implemented, as described and recited herein.
FIG. 1D is a cross-sectional view of an example of a climate-controlled transport unit for which at least one non-limiting example of distributed battery management for transport climate control may be implemented, as described and recited herein.
FIG. 1E is a front perspective view of an example of a climate-controlled vehicle for transporting passengers for which at least one non-limiting example of distributed battery management for transport climate control may be implemented, as described and recited herein.
FIG. 2A is a schematic view of a non-limiting example embodiment of a battery module in accordance with at least one embodiment of distributed battery management for transport climate control may be implemented, as described and recited herein.
FIG. 2B is a schematic view of another non-limiting example embodiment of a battery module in accordance with at least one embodiment of distributed battery management for transport climate control may be implemented, as described and recited herein.
FIG. 3A is a schematic view of a configuration of distributed batteries in accordance with a non-limiting example of distributed battery management for transport climate control may be implemented, as described and recited herein.
FIG. 3B is a schematic view of another configuration of distributed batteries in accordance with a non-limiting example of distributed battery management for transport climate control may be implemented, as described and recited herein.
FIG. 3C is a schematic view of another configuration of distributed batteries in accordance with a non-limiting example of distributed battery management for transport climate control may be implemented, as described and recited herein.
FIG. 3D is a schematic view of another configuration of distributed batteries in accordance with a non-limiting example of distributed battery management for transport climate control may be implemented, as described and recited herein.
FIG. 4 shows a flow of operations among components of a distributed battery management system for transport climate control, in accordance with at least some of the non-limiting example embodiments described and recited herein.
FIG. 5A shows a flow of operations for dynamic address claim arbitration among distributed batteries, in accordance with at least some of the non-limiting example embodiments described and recited herein.
FIG. 5B shows a continuation of the flow of operations started in FIG. 5A.
FIG. 6A shows a flow of operations for determining a conductive configuration of distributed batteries, in accordance with at least some of the non-limiting example embodiments described and recited herein.
FIG. 6B shows a continuation of the flow of operations started in FIG. 6A.
FIG. 7. shows examples of status and/or error indicators, which may be provided to a user interface.

### DETAILED DESCRIPTION

The embodiments described and recited herein include, but are not limited to, a distributed battery system that allows the power architecture of the transport unit, particularly the TCS, to be separated in separate blocks that are capable of being spread out along the trailer body in multiple electrical or physical configurations and/or orientations.

As stated above, transport climate control may require accessories that are interspersed beneath a transport unit.

However, a distributed battery management system (BMS), as described and recited herein, allows each battery node to be smaller than the whole, while simultaneously self-containing all functional and safety features. Accordingly, the non-limiting example embodiments described and recited herein include, and pertain to, spatially distributed appropriately sized battery blocks that are capable of being installed according to customized specifications, thus allowing room for the aforementioned competing accessories, while collectively providing at least the required power for the TCS.

That is, the presently described and recited BMS provides TCS and/or transport unit with one or more battery modules without having to compromise on the provision of other required, or at least highly desired, transport climate control accessories beneath the transport container or otherwise attached to a corresponding chassis.

In the following detailed description, reference is made to the accompanying drawings, which form a part of the description. In the drawings, similar symbols typically identify similar components, unless context dictates otherwise. Furthermore, unless otherwise noted, the description of each successive drawing may reference features from one or more of the previous drawings to provide clearer context and a substantive explanation of the current example embodiment. Still, the example embodiments described in the detailed description, drawings, and claims are not intended to be limiting. Other embodiments may be utilized, and other changes may be made, without departing from the spirit or scope of the subject matter presented herein. It will be readily understood that the aspects of the present disclosure, as generally described and recited herein, as well as illustrated in the drawings, may be arranged, substituted, combined, separated, and designed in a wide variety of different configurations, all of which are explicitly contemplated herein.

Additionally, portions of the present disclosure may be described herein in terms of functional block components and various processing steps. It should be appreciated that such functional blocks may be realized by any number of hardware and/or software components configured to perform the specified functions.

In the present description and recitation, the following terms may be used, in addition to their accepted meaning, as follows.

A battery module, as referenced and recited herein, refers to a self-contained component or system having therein modules or components, including at least one or more battery cells. Additional components typically found in a battery module are safety components; communicative nodes or components, *e*.*g*., controller area network nodes; and/or conductive nodes or components to facilitate electric conductivity among multiple battery modules.

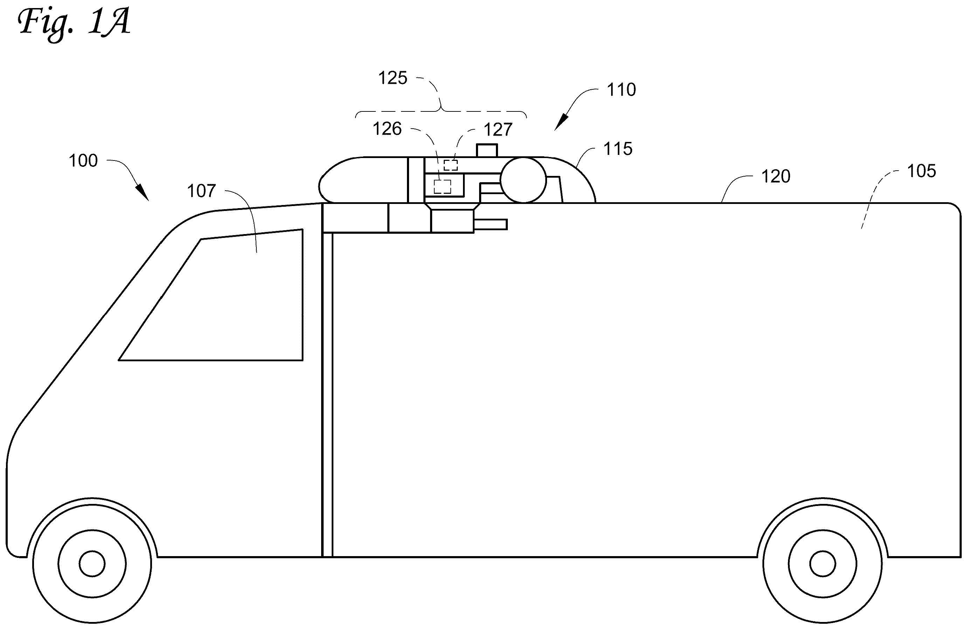

Chassis, as referenced and recited herein, refers to a supporting frame, typically, for a trailer that is conditioned by a TCS. In the trucking industry, a chassis may refer to a semitrailer onto which a cargo container is mounted for transport. Therefore, as referenced and recited herein, a chassis may be disposed on the underside of a van, straight-truck, tractor, climate-controlled transport unit, trailer, *etc.,* including those vehicles and/or transportation units illustrated and described with reference to FIGS. 1A - 1E. However, the embodiments are not limited to the underside, as set forth above. The embodiments described and recited herein may contemplate attachments, railings, *etc.,* disposed on an exterior sidewall of the embodiments described above or even an interior surface thereof, so long as such surface is able to accommodate a distributed configuration of battery modules as described and/or recited further below.

Distributed, as referenced and/or recited herein, may pertain to a configuration of battery modules that includes multiple battery modules disposed and/or attached to a chassis, *e.g.,* on an undercarriage thereof, in a manner that facilitates a scalable, fault-tolerant, and cost-effective system for a transport climate control system (TCS) and other transport HVAC applications. As referenced and/or recited herein, a distributed BMS architecture allows each individual battery module, *i.e.,* node, to be self-contained with a full complement of functional and safety features. Thus, appropriately sized battery modules may be spatially distributed, even in a customized manner. In the trucking industry, customizable configurations as described and recited herein, provide for other undercarriage, *i.e.,* underbody, accessories including, but not limited to, lift gates, spare wheels, loading ramps, *etc.,* at the time of installation and subsequent uplifts.

Arbitration or bus arbitration typically refers to a known process by which an active bus leader or master accesses the bus, relinquishes control, and then transfers control to a different bus-seeking processor unit; whereas a bus leader or master acts as a controller that accesses the bus on behalf of other bus components. As referenced and/or recited herein, distributive bus arbitration is implemented by which each of a plurality of battery modules in each configuration participates in selecting a lead, *i.e.,* master, battery module that will coordinate how the battery modules provide power to the TCS as well as how the battery modules interact with a load. In accordance with the non-limiting example embodiments described and recited herein, arbitration may occur at every instance of load boot-up, or an arbitration result may be sustained so long as the configuration of batteries is sustained.

A parallel configuration of two or more distributed batteries, as referenced and/or recited herein, refers to a configuration in which there is a common voltage across all components, even as one or more additional battery modules add to the total system energy.

A series configuration of two or more distributed batteries, as referenced and/or recited herein, refers to a configuration in which positive and negative connectors of respective distributed batteries are connected and there is a common current across all components, even as one or more additional battery modules add to the total system energy and its overall voltage.

In the following detailed description, reference is made to the accompanying drawings, which illustrate embodiments in which the invention may be practiced. These embodiments are described in sufficient detail to enable those skilled in the art to practice what is claimed, and it is to be understood that other embodiments may be utilized without departing from the spirit and the scope of the claims. The following detailed description and the accompanying drawings, therefore, are not to be taken in a finite sense.

The embodiments described and/or recited herein are generally directed to the provision of power and data for a transport climate control system (TCS). In some embodiments, a climate control circuit is provided that includes a main heat transfer circuit and a chiller heat transfer circuit.

FIG. 1A illustrates one embodiment of a climate-controlled van 100 that includes a climate-controlled space 105 for carrying cargo and a transport climate control system (TCS) 110 for providing climate control within the climate-controlled space 105. TCS 110 includes a climate control unit (CCU) 115 that is mounted to a rooftop 120 of the van 100. The transport climate control system 110 may include, amongst other components, a climate control circuit (not shown) that connects, for example, a compressor, a condenser, evaporator(s) and an expansion device to provide climate control within the climate-controlled space 105.

The climate-controlled van 100 may include a second climate-controlled space 107 that may be an operator compartment of the climate-controlled van 100 (*e.g.,* a cabin, *etc.*)*.* For example, the second climate-controlled space 107 accommodates an operator when operating (*e.g.,* driving, *etc.*) the climate-controlled van 100. In an embodiment, the transport climate control system 110 may be configured to also provide climate control to the second climate-controlled space 107.

The climate-controlled van 100 may be powered by a distributed battery management system (BMS - not shown in FIG. 1A), which is a power source for powering the climate-controlled van 100 and/or the TCS 110, which is disposed on the undercarriage or chassis of van 100. In an embodiment, the climate-controlled van 100 may also include an engine (not shown) as a power source. The climate-controlled van 100 may be a hybrid vehicle that uses a combination of battery power and engine power or an electric vehicle that does not include an engine. In an embodiment, the TCS 110 may also include an engine (not shown) as a power source. TCS 110 may be a hybrid power system that uses a combination of battery power and engine power or an electric power system that does not include or rely upon an engine (not shown) of the climate-controlled van 100 for power. BMS for the van 100 in FIG. 1A is located outside CCU 115.

It will be appreciated that the embodiments described and/or recited herein are not limited to climate-controlled vans, but may apply to any type of transport unit (*e.g.,* a truck, a container (such as a container on a flat car, an intermodal container, a marine container, *etc.*)*,* a trailer, a box car, a semi-tractor, a bus, or other similar transport unit), *etc.*

TCS 110 also includes a programmable climate controller 125 and one or more sensors (not shown) that are configured to measure one or more internal conditions or parameters of TCS 110 (*e.g.,* an ambient temperature outside of the van 100, an ambient humidity outside of the van 100, a compressor suction pressure, a compressor discharge pressure, a supply air temperature of air supplied by CCU 115 into the climate-controlled space 105, a return air temperature of air returned from the climate-controlled space 105 back to CCU 115, a humidity within the climate-controlled space 105, a temperature of components of BMS, a temperature of the second climate-controlled space 107, *etc.*) and communicate parameter data to the climate controller 125. Climate controller 125 is configured to control operation of the transport climate control system 110 including the components of the climate control circuit. The climate controller 115 may comprise a single integrated control unit 126 or may comprise a distributed network of climate controller elements 126, 127. The number of distributed control elements in a given network may depend upon the particular application of the principles described herein.

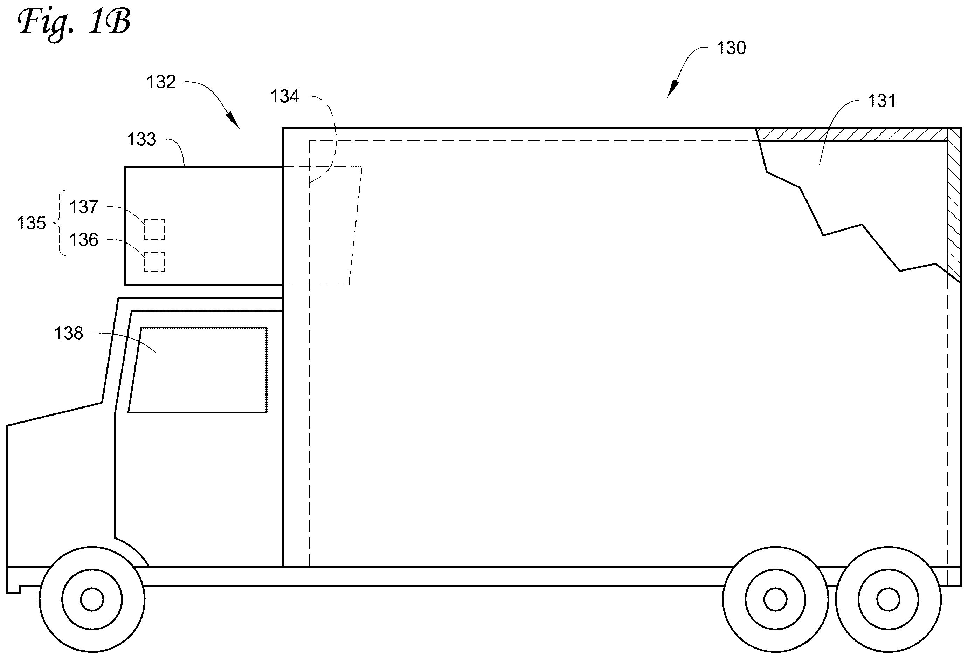

FIG. 1B illustrates one embodiment of a climate-controlled straight truck 130 that includes a climate-controlled space 131 for carrying cargo and a transport climate control system 132. TCS 132 includes CCU 133 that is mounted to a front wall 134 of the climate-controlled space 131. CCU 133 may include, amongst other components, a climate control circuit (not shown) that connects, for example, a compressor, a condenser, an evaporator and an expansion device to provide climate control within the climate-controlled space 131.

The climate-controlled straight truck 130 may include a second climate-controlled space 138. The second climate-controlled space 138 may be an operator compartment of the climate-controlled straight truck 130 (*e.g.,* a cabin, *etc.*)*.* For example, the second climate-controlled space 144 may accommodate an operator of the climate-controlled straight truck 130 when operating the climate-controlled straight truck 130 (*e.g.,* driving, *etc.*)*.* In an embodiment, TCS 132 may be configured to provide climate control to the second climate-controlled space 138. However, these embodiments are not limiting. In at least one alternative embodiment, climate-controlled straight truck 130 may include even more, *e.g.,* three, cargo zones, for which TCS 132 may provide climate control.

The climate-controlled straight truck 130 may include a distributed BMS (not shown in FIG. 1B) attached to an undercarriage or chassis of the truck 130 that is a power source for powering the climate-controlled straight truck 130 and/or the transport climate control system 132. In an embodiment, the climate-controlled straight truck 130 may also include an engine (not shown) as a power source. The climate-controlled straight truck 130 may be a hybrid vehicle that uses a combination of battery power and engine power or an electric vehicle that does not include an engine. In an embodiment, the TCS 132 may also include an engine (not shown) as a power source. TCS 132 may be a hybrid power system that uses a combination of battery power and engine power or an electric power system that does not include or rely upon an engine (not shown) of the climate-controlled straight truck 130 for power. The distributed BMS for truck 130 in FIG. 1B is located outside CCU 133.

TCS 132 also includes a programmable climate controller 135 and one or more sensors (not shown) that are configured to measure one or more parameters of the transport climate control system 132 (*e.g.,* an ambient temperature outside of the truck 130, an ambient humidity outside of the Truck 130, a compressor suction pressure, a compressor discharge pressure, a supply air temperature of air supplied by CCU 133 into the climate-controlled space 131, a return air temperature of air returned from the climate-controlled space 131 back to CCU 133, a humidity within the climate-controlled space 131, a temperature of the components of the distributed BMS, a temperature of the second climate-controlled space 138, *etc.*) and communicate parameter data to the climate controller 135. The climate controller 135 is configured to control operation of the TCS 132 including components of the climate control circuit. The climate controller 135 may comprise a single integrated control unit 136 or may comprise a distributed network of climate controller elements 136, 137. The number of distributed control elements in a given network may depend upon the particular application of the principles described herein.

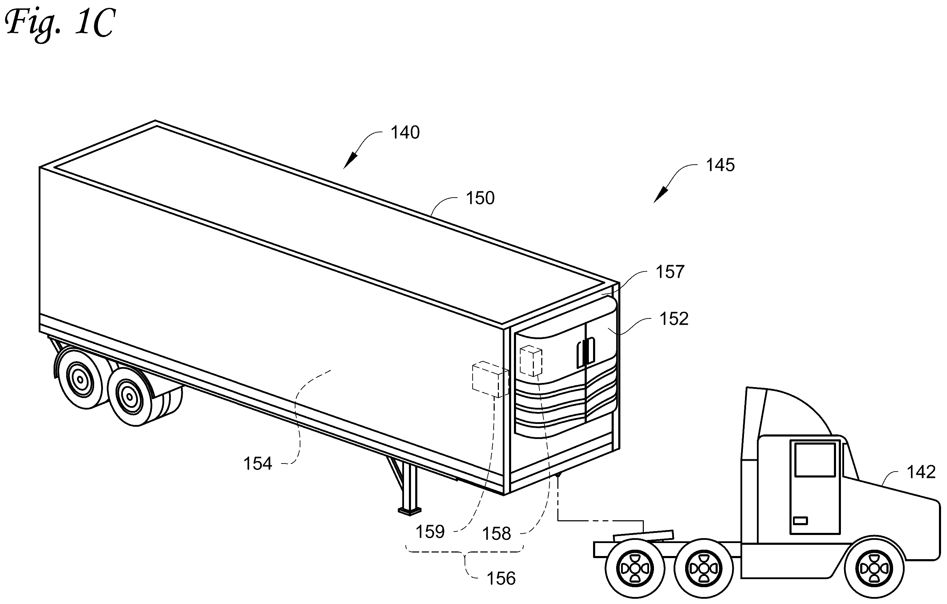

FIG. 1C illustrates one embodiment of a climate-controlled transport unit 140 attached to a tractor 142. The climate-controlled transport unit 140 includes a transport climate control system (TCS) 145 for a transport unit 150. Tractor 142 is attached to and is configured to tow the transport unit 150. The transport unit 150 shown in FIG. 1C is a trailer.

TCS 145 includes CCU 152 that provides control over internal conditions (e.g. temperature, humidity, air quality, *etc.*) within a climate-controlled space 154 of the transport unit 150. CCU 152 is disposed on a front wall 157 of the transport unit 150. In other embodiments, it will be appreciated that CCU 152 may be disposed, for example, on a rooftop or another wall of the transport unit 150. CCU 152 includes a climate control circuit (not shown) that connects, for example, a compressor, a condenser, an evaporator and an expansion device to provide conditioned air within the climate-controlled space or spaces 154.

Tractor 142 may include a second climate-controlled space 144. The second climate-controlled space 144 may be an operator compartment of the tractor 142 (*e.g.,* a cabin, *etc.*)*.* For example, the second climate-controlled space 144 may accommodate an operator of the tractor 142 when operating the tractor 142 *(e.g.,* driving, *etc.).*

The tractor 142 may include a distributed BMS (not shown in FIG. 1C) that is a power source for powering the TCS 145. In an embodiment, the tractor 142 may also include an engine (not shown) as a power source. The tractor 142 may be a hybrid vehicle that uses a combination of battery power and engine power or an electric vehicle that does not include an engine.

In an embodiment, the TCS 145 may also include an engine (not shown) as a power source. TCS 145 may be a hybrid power system that uses a combination of battery power and engine power or an electric power system that does not include or rely upon an engine (not shown) of climate-controlled transport unit 140 or the tractor 142 for power.

TCS 145 also includes a programmable climate controller 156 and one or more sensors (not shown) that are configured to measure one or more parameters of the transport climate control system 145 (*e.g.,* an ambient temperature outside of the transport unit 150, an ambient humidity outside of the transport unit 150, a compressor suction pressure, a compressor discharge pressure, a supply air temperature of air supplied by CCU 152 into the climate-controlled space 154, a return air temperature of air returned from the climate-controlled space 154 back to CCU 152, a humidity within the climate-controlled space 154, a temperature of the battery 146, a temperature of one or more components of the distributed BMS, a temperature of the second climate-controlled space 144, *etc.*) and communicate parameter data to the climate controller 156. Climate controller 156 is configured to control operation of the transport climate control system 145 including components of the climate control circuit. The climate controller 156 may comprise a single integrated control unit 158 or may comprise a distributed network of climate controller elements 158, 159. The number of distributed control elements in a given network may depend upon the particular application of the principles described herein.

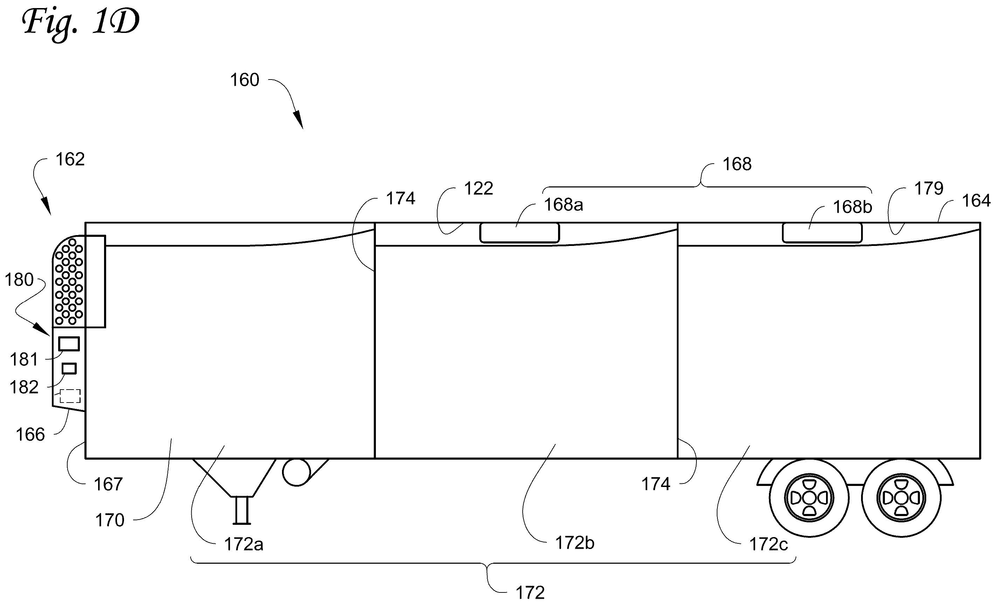

FIG. 1D illustrates another embodiment of a climate-controlled transport unit 160. The climate-controlled transport unit 160 includes a multi-zone transport climate control system (MTCS) 162 for a transport unit 164 that may be towed, for example, by a tractor *(e.g.,* the tractor 142 in FIG. 1C). It will be appreciated that the embodiments described and/or recited herein are not limited to tractor and trailer units, but may apply to any type of transport unit *(e.g.,* a truck, a container (such as a container on a flat car, an intermodal container, a marine container, *etc.),* a box car, a semi-tractor, a bus, or other similar transport unit), *etc.*

The MTCS 162 includes CCU 166 and a plurality of remote units 168 that provide internal control (*e.g.* temperature, humidity, air quality, *etc.)* within a climate-controlled space 170 of the transport unit 164. The climate-controlled space 170 may be divided into a plurality of zones 172. The term "zone" means a part of an area of the climate-controlled space 170 separated by walls 174. CCU 166 may operate as a host unit and provide climate control within a first zone 172a of the climate-controlled space 170. The remote unit 168a may provide climate control within a second zone 172b of the climate-controlled space 170. The remote unit 168b may provide climate control within a third zone 172c of the climate-controlled space 170. Accordingly, MTCS 162 may be used to separately and independently control internal condition(s) within each of the multiple zones 172 of the climate-controlled space 170.

CCU 166 is disposed on a front wall 167 of the transport unit 160. In other embodiments, it will be appreciated that CCU 166 may be disposed, for example, on a rooftop or another wall of the transport unit 160. CCU 166 includes a climate control circuit (not shown) that connects, for example, a compressor, a condenser, an evaporator and an expansion device to provide conditioned air within the climate-controlled space 170. The remote unit 168a is disposed on a ceiling 179 within the second zone 172b and the remote unit 168b is disposed on the ceiling 179 within the third zone 172c. Each of the remote units 168a and 168b include an evaporator, one or more fans, and one or more heaters (not shown) that connect to the rest of the climate control circuit provided in CCU 166.

The climate-controlled transport unit 160 may include a distributed BMS (not shown in FIG. 1D) that is a power source for MTCS 162. In an embodiment, CCU 166 may also include an engine (not shown) as a power source. In an embodiment, the MTCS 162 may also include an engine (not shown) as a power source. MTCS 162 may be a hybrid power system that uses a combination of battery power and engine power or an electric system that does not include or rely upon an engine (not shown) of the climate-controlled transport unit 160 or the tractor for power.

The MTCS 162 also includes a programmable climate controller 180 and one or more sensors (not shown) that are configured to measure one or more parameters of MTCS 162 (*e.g.,* an ambient temperature outside of the transport unit 164, an ambient humidity outside of the transport unit 164, a compressor suction pressure, a compressor discharge pressure, supply air temperatures of air supplied by CCU 166 and the remote units 168 into each of the zones 172, return air temperatures of air returned from each of the zones 172 back to the respective CCU 166 or remote unit 168a or 168b, a humidity within each of the zones 118, a temperature of one or more components of the distributed BMS, a temperature of a battery of the tractor, a temperature of the second climate-controlled space in the tractor, *etc.*) and communicate parameter data to a climate controller 180. Climate controller 180 is configured to control operation of MTCS 162 including components of the climate control circuit. The climate controller 180 may comprise a single integrated control unit 181 or may comprise a distributed network of climate controller elements 181, 182. The number of distributed control elements in a given network may depend upon the particular application of the principles described herein.

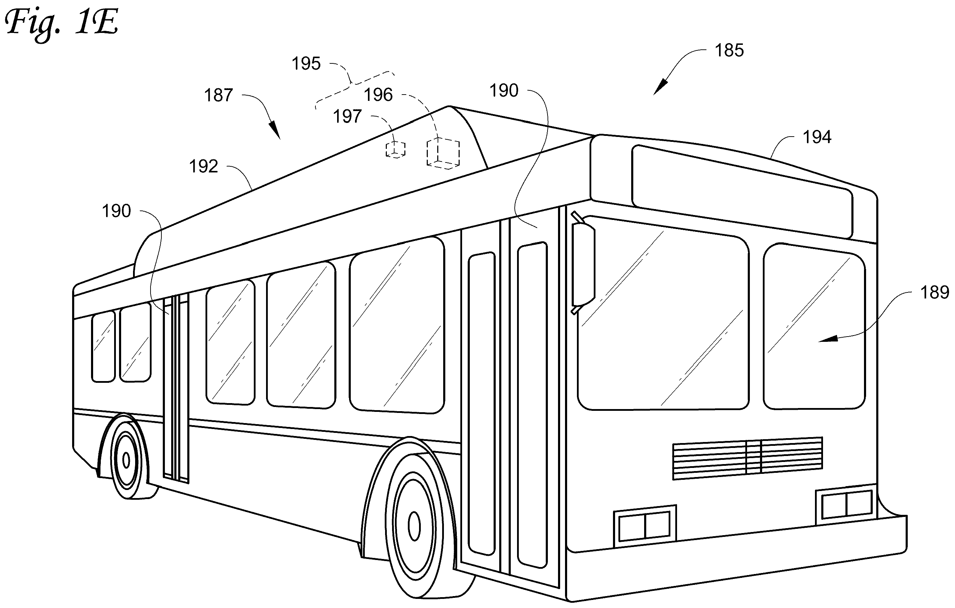

FIG. 1E is a perspective view of a vehicle 185 including a TCS 187, according to one embodiment. Vehicle 185 is a mass-transit bus that may carry passenger(s) (not shown) to one or more destinations. In other embodiments, the vehicle 185 may be a school bus, railway vehicle, subway car, or other commercial vehicle that carries passengers. The vehicle 185 includes a climate-controlled space (*e.g*., passenger compartment) 189 supported that may accommodate a plurality of passengers. The vehicle 185 includes doors 190 that are positioned on a side of the vehicle 185. In the embodiment shown in FIG. 1E, first door 190 is located adjacent to a forward end of the vehicle 185, and a second door 190 is positioned towards a rearward end of the vehicle 185. Each door 190 is movable between an open position and a closed position to selectively allow access to the climate-controlled space 189. The transport climate control system 187 includes CCU 192 attached to roof 194 of vehicle 185.

CCU 192 includes a climate control circuit (not shown) that connects, for example, a compressor, a condenser, an evaporator and an expansion device to provide conditioned air within the climate-controlled space 189.

Vehicle 185 may include a distributed battery BMS (not shown in FIG. 1E) attached to an undercarriage or chassis of vehicle 185 that is a power source for powering the vehicle 185 and/or the TCS 187. In an embodiment, vehicle 185 may also include an engine (not shown) as a power source. The vehicle 185 may be a hybrid vehicle that uses a combination of battery power and engine power or an electric vehicle that does not include an engine. In an embodiment, the TCS 187 may also include an engine (not shown) as a power source. TCS 187 may be a hybrid power system that uses a combination of battery power and engine power or an electric power system that does not include or rely upon an engine (not shown) of the vehicle 185 for power.

TCS 187 also includes a programmable climate controller 195 and one or more sensors (not shown) that are configured to measure one or more parameters of the transport climate control system 187 (*e.g.,* an ambient temperature outside of the vehicle 185, a space temperature within the climate-controlled space 189, an ambient humidity outside of the vehicle 185, a space humidity within the climate-controlled space 189, a temperature for one or more components of the distributed BMS, *etc.*) and communicate parameter data to the climate controller 195. The climate controller 195 is configured to control operation of TCS 187 including components of the climate control circuit. The climate controller 195 may comprise a single integrated control unit 196 or may comprise a distributed network of climate controller elements 196, 197. The number of distributed control elements in a given network may depend upon the particular application of the principles described herein.

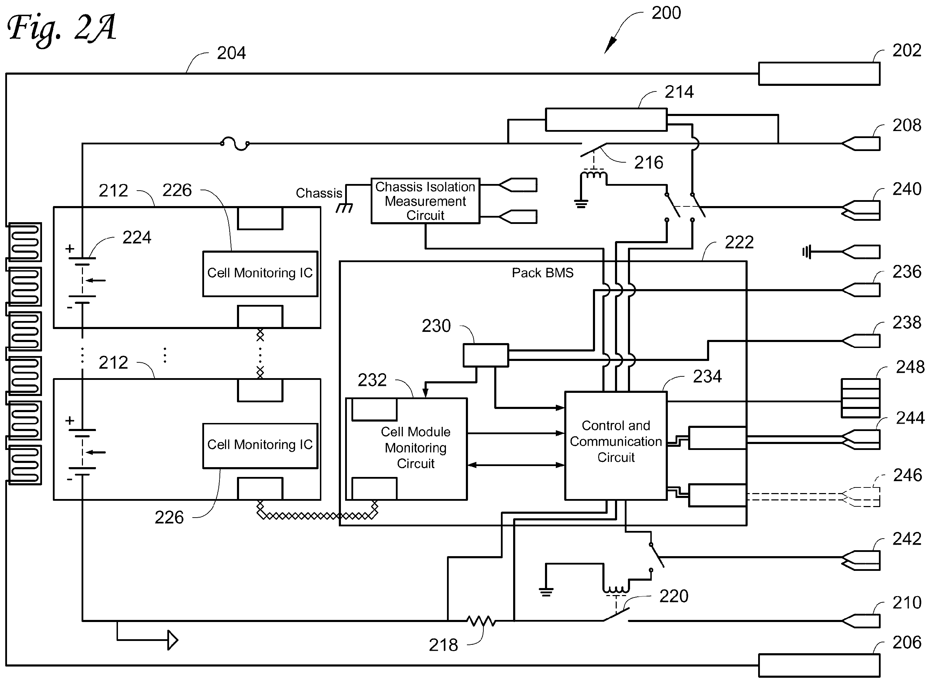

FIG. 2A is a schematic view of a non-limiting example embodiment of a battery module, *e.g.,* in a 420V strip configuration, which may alternatively be referred to as battery module, in accordance with at least one embodiment of distributed battery management for transport climate control, as described and recited herein.

FIG. 2A illustrates a schematic of a battery module according to a non-limiting example embodiment. Battery module 200 includes temperature control fluid inlet 202, temperature control fluid channel 204, and temperature control fluid outlet 206. Battery module 200 further includes a positive terminal 208, a negative terminal 210, and a plurality of cell modules 212. The positive terminal 208 may be connected to one of the cell modules 212 by way of a precharge circuit 214 and a contactor or solid state relay 216. At least one of the cell modules 212 may be connected to the negative terminal 210, with the connection including a current sensor 218 and a second contactor 220. The respective contactors or solid-state relays 216, 220 may each be part of a high voltage interlock loop (HVIL) including, for example, a ground connection, a breaker, or the like. The battery module 200 further includes a battery management system (BMS) 222.

Battery module 200 is a high-voltage battery module, for example a battery module configured to provide approximately 420V as a voltage for the battery module. Non-limiting examples of voltages provided by a high-voltage battery module such as the battery module 200 may range from 300V to 800V. In at least one non-limiting example embodiment, the voltages provided by a high-voltage battery module such as the battery module 200 may range from 300V to 420V. In at least one other non-limiting example embodiment, the battery module is a hazardous voltage battery, having a voltage of 60V or greater. Battery module 200 may be a battery module configured for use in a trailer or truck, *e.g.* as shown and described with reference to FIGS. 1A - 1E. Battery module 200 may include a temperature control fluid circuit including temperature control fluid inlet 202, temperature control fluid channel 204, and temperature control fluid outlet 206. Temperature control fluid inlet 202 is configured to receive a temperature control fluid, such as a fluid, from a suitable temperature control fluid source such as a battery temperature control system circulating said temperature control fluid. The temperature control fluid channel 204 is a channel configured to convey the temperature control fluid through the battery module. At least a portion of the temperature control fluid channel 204 is configured to allow heat exchange such that the temperature control fluid may absorb heat from one or more components of the battery module 200 thereby heating or cooling said components, with non-limiting examples of components including one or more cell modules 212, cells 224, and/or one or more circuits of the BMS 222. The temperature control fluid channel may direct the temperature control fluid to a temperature control fluid outlet 206 where temperature control fluid may exit battery module 200, for example to be returned to the battery temperature control system circulating said temperature control fluid through one or more of battery modules 204.

Cell modules 212 may each include cells 224 and a cell monitoring circuit 226, with a non-limiting example of a cell 224 being a 21700 cell. Cell monitoring circuit 226 may include an integrated circuit configured to measure one or more operational conditions of the battery, such as one or more voltages, currents, temperatures, state of charge, the presence of a fault, or the like. In an embodiment, the cell modules 212 may be omitted, and cells 224 placed directly into battery module 200 by themselves.

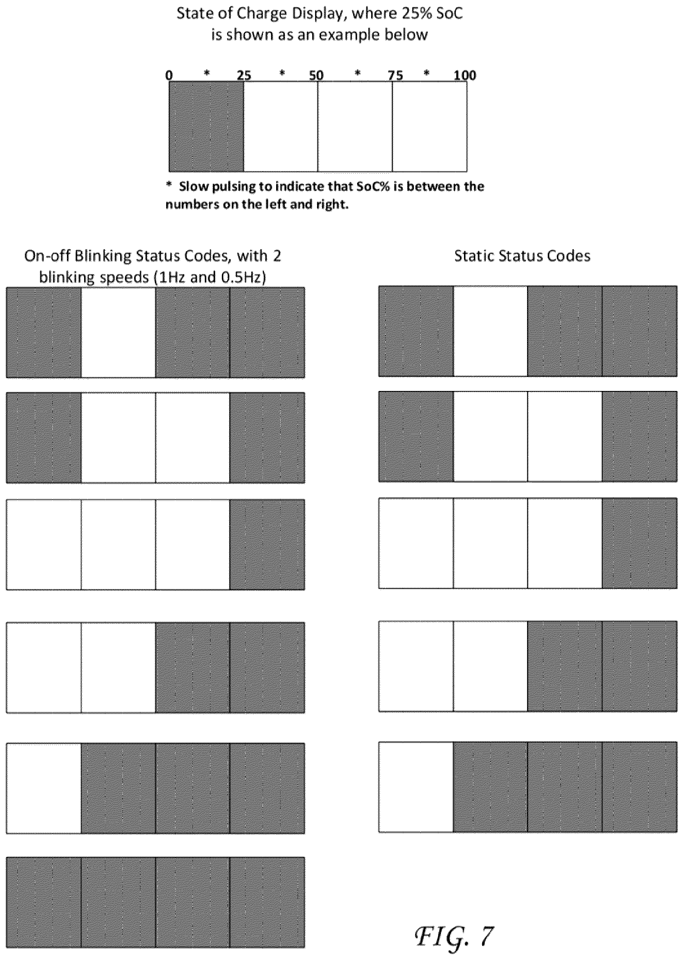

FIG. 7 shows examples of status and/or error indicators, which may be provided to a user interface, to provide a user with information measured by cell monitoring circuit 226 as well as system statuses and identification information as determined by the Control and Communication Circuit 234.

Cell modules 212 may be electrically connected in series and provided in a sufficient number so as to achieve the desired voltage for the battery module 200. For example, when battery module 200 is a 420V battery module, and each of cell modules 212 is a 42V cell module, ten cell modules 212 may be provided and connected in series so as to provide the 420V voltage for battery module 200. Each cell module may include a respective cell monitoring circuit 226. The cell monitoring circuits 226 may be connected to one another and/or the BMS 222, for example through a daisy-chain connecting the individual cell-monitoring circuits 226 of the various cell modules 212.

BMS 222 is configured to control the battery module 200. BMS 222 may include power circuit 230, cell module monitoring circuit 232, and control and communications circuit 234. Power circuit 230 may receive power and distribute power so as to operate the other components of BMS 222, in addition to the BMS itself. Cell module monitoring circuit 232 is connected to cell monitoring circuits 226 and/or otherwise be configured to measure, detect, or receive operational characteristics of the battery module 200 such as voltage, current, temperature, state of charge, presence of faults and the like. BMS 222 may include any further suitable additional connections, such as connections to an external low voltage BMS power supply 236, battery wake 238, circuit portions connected to high voltage interlock loop (HVIL) B+ and HVIL B- 240, 242. The control and communication circuit 234 may be connected to private and/or public network connections 244, 246 so as to communicate with private and/or public networks for vehicle components such as, as a non-limiting example, a battery charger or the CCU. In an embodiment, BMS 222 includes an isolation measurement circuit configured to measure, typically at start-up or awakening of the respective battery module 200, the resistance of battery module 200 with respect to the chassis to which the battery module 200 is attached or otherwise corresponds. The isolation measurement circuit may measure resistance from the positive and negative terminals of the battery to the chassis of the battery itself and of the vehicle chassis to which it is bonded.

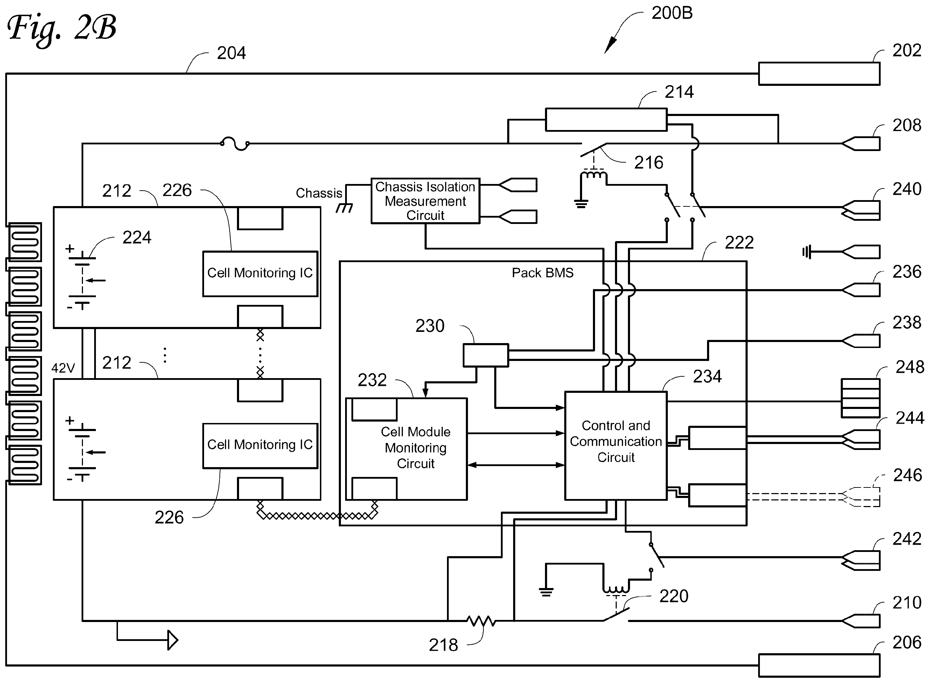

FIG. 2B illustrates a schematic of a battery module according to at least one non-limiting example embodiment. Battery module 200B includes temperature control fluid inlet 202, temperature control fluid channel 204, and temperature control fluid outlet 206. Battery module 200B further includes a positive terminal 208, a negative terminal 210, and a plurality of cell modules 212. The positive terminal 208 may be connected to one of the cell modules 212 by way of a precharge circuit 214 and a contactor or solid state relay 216. At least one of the cell modules 212 may be connected to the negative terminal 210, with the connection including a current sensor 218 and a second contactor or solid state relay 220. The respective contactors or solid state relays 216, 220 may, in an embodiment, each be part of a high voltage interlock loop (HVIL) including, for example, a ground connection, a breaker, or the like. The battery module 200 further includes a battery management system (BMS) 222.

Battery module 200B is a low-voltage battery module, for example a battery module configured to provide approximately 42V as a voltage for said battery module. Non-limiting examples of voltages provided by a low-voltage battery module such as the battery module 200B may range from 30V to 42V. Battery module 200B may be a battery module configured for use in a trailer or truck, such as those shown and described with reference to FIGS. 1A -1E.

Battery module 200B may include a temperature control fluid circuit including temperature control fluid inlet 202, temperature control fluid channel 204, and temperature control fluid outlet 206. Temperature control fluid inlet 202 is configured to receive a temperature control fluid, such as a fluid, from a suitable temperature control fluid source such as a battery temperature control system circulating said temperature control fluid. The temperature control fluid channel 204 is a channel configured to convey the temperature control fluid through the battery module. At least a portion of the temperature control fluid channel 204 is configured to allow heat exchange such that the temperature control fluid may absorb heat from one or more components of the battery module 200B thereby cooling said components, with non-limiting examples of components including one or more cells 224 and/or one or more circuits of the BMS 222. The temperature control fluid channel may direct the temperature control fluid to a temperature control fluid outlet 206 where temperature control fluid may exit battery module 200B, for example to be returned to the battery temperature control system circulating said temperature control fluid.

Cell modules 212 may each include cells 224 and a cell monitoring circuit 226, with a non-limiting example of a cell 224 being a 21700 cell. Cell monitoring circuit 226 may include an integrated circuit configured to measure one or more operational conditions of the battery, such as one or more voltages, temperatures, currents, state of charge, the presence of a fault, or the like.

Cell modules 212 may be electrically connected in series and provided in a sufficient number so as to achieve the desired voltage for the battery module 200B. For example, when battery module 200B is a 42V battery module, and each of cell modules 212 is a 42V cell module, ten cell modules 212 may be provided and connected all in parallel so as to provide the 42V voltage for the battery module 200B. Each cell module may include a respective cell monitoring circuit 226. The cell monitoring circuits 226 may be connected to one another and/or the BMS 222, for example through a daisy-chain connecting the individual cell monitoring circuits 226 of the various cells.

BMS 222 is configured to control the battery module 200B. BMS 222 may include power circuit 230, cell module monitoring circuit 232, and control and communications circuit 234. Power circuit 230 may receive power and distribute power to operate the other components of BMS 222, in addition to powering the BMS 222 itself. Cell module monitoring circuit 232 may be connected to cell monitoring circuits 226 and/or otherwise be configured to measure, detect, or receive operational characteristics of the battery module 200 such as voltage, current, temperature, state of charge, presence of faults and the like. BMS 222 may include any further suitable additional connections, such as connections to a low voltage BMS power supply 236, battery wake 238, circuit portions connected to high voltage interlock loop (HVIL) B+ and HVIL B- 240, 242. The control and communication circuit 234 may be connected to private and/or public network connections 244, 246 to communicate with private and/or public networks for vehicle components such as, as a non-limiting example, a battery charger or the CCU. In an embodiment, BMS 222 includes an isolation measurement circuit configured to measure, typically at start-up or awakening of a respective battery module, the resistance of battery module 200B with respect to the chassis to which the battery module 200B is attached or otherwise corresponds. The isolation measurement circuit may measure resistance from the positive and negative terminals of the battery to the chassis of the battery itself and of the vehicle chassis to which it is bonded.

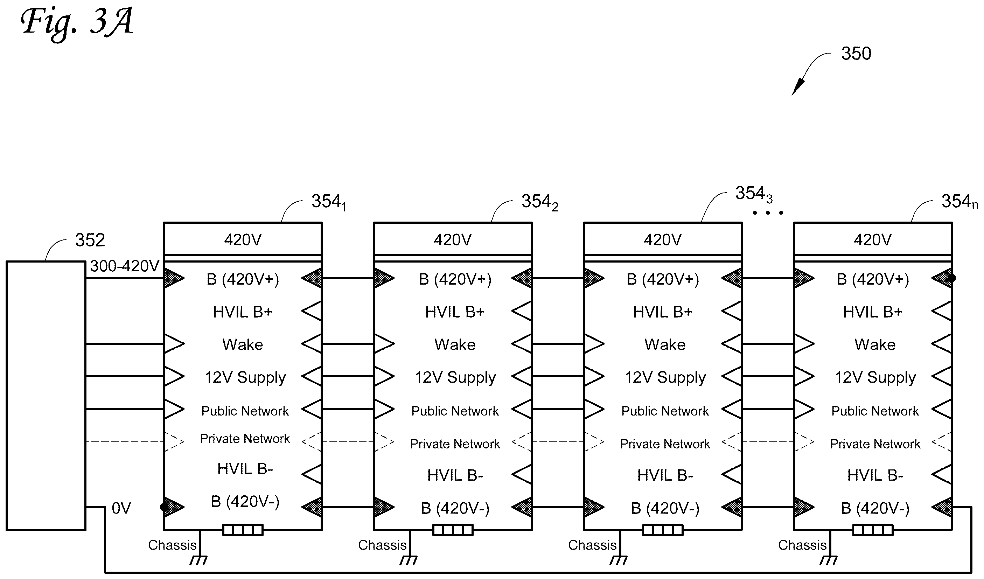

FIG. 3A illustrates an architecture of a battery system according to an embodiment. Battery system 350 includes a load 352 and a plurality of battery modules 354₁₋ₙ configured to supply power to load 352. Each of the battery modules 354₁₋ₙ may be, as a non-limiting example, a high-voltage battery module such as the battery module 200 as described above and shown in FIG. 2A. The battery modules 354₁₋ₙ are connected to the load 352 such that the positive terminal of a first battery module 354₁ of the plurality is connected to the load 352, a negative terminal of the final battery module 354ₙ of the plurality is connected to the load 352, and otherwise the battery modules 354₁₋ₙ are connected in parallel with one another. All other connections of the battery modules 354₁₋ₙ such as battery wake, BMS power supply, public data connections, and/or private data connections may be, for example, daisy chained across battery modules 354₁₋ₙ.

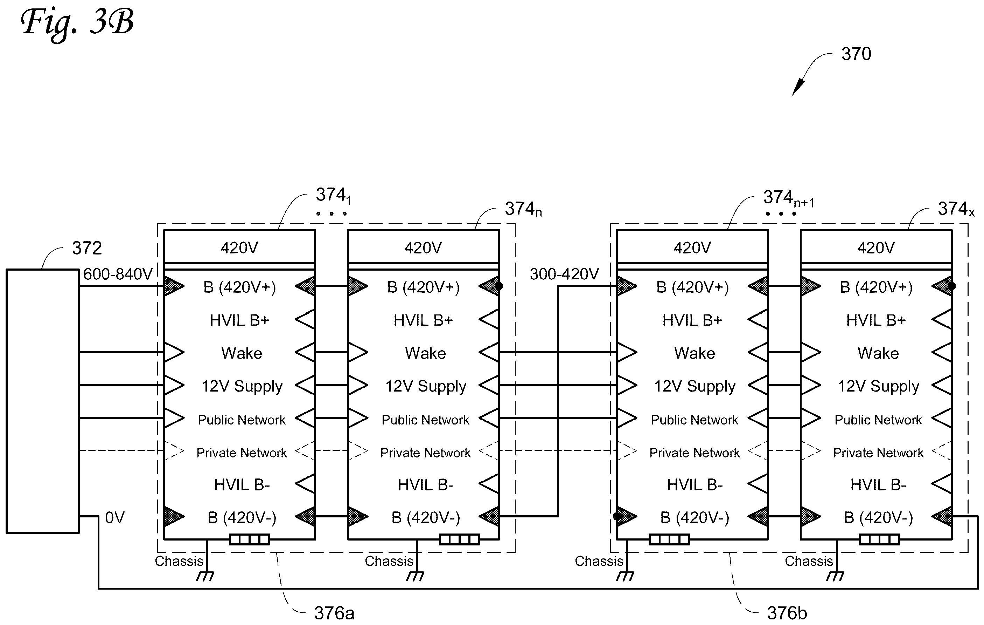

FIG. 3B illustrates an architecture of a battery system according to an embodiment. Battery system 370 includes a load 372 and a plurality of battery modules 374₁₋ₓ configured to supply power to the load 372. Each of the battery modules 374₁₋ₓ may be, as a non-limiting example, a high-voltage battery module such as the battery module 200 as described above and shown in FIG. 2A. In the non-limiting example embodiment of FIG. 3B, the plurality of battery modules 374₁₋ₓ may be divided into a plurality of groups 376a,b, each group including at least one battery module. In an embodiment, the number of batteries in each group is equal, for example where first group 376a includes battery modules 1 to n, second group 376b includes battery modules n+1 to n+n. A positive terminal of first battery module 374₁ of the first group 376a may be connected to the load 372. Other battery modules within the first group 376a may be connected to one another in parallel. A negative terminal of final battery module 374ₙ of the first group 376a may be connected to the positive terminal of the first battery module 374ₙ₊₁ of the second group 376b. A negative terminal of the final battery module 374ₓ of the second group 376b may be connected to load 372. Other battery modules within the second group 376b may be connected to one another in parallel. All other connections of the battery modules 374₁₋ₓ such as battery wake, BMS power supply, public data connections, and/or private data connections may be, for example, daisy chained across battery modules 374₁₋ₓ. When the battery modules 374₁₋ₓ are each 420V battery modules, the connections shown in FIG. 3B for battery system 370 may provide load 372 with a voltage of 840V. It is understood that while Fig. 3B includes two groups 376a,b, additional groups may be provided with the positive terminals of the final battery module of each group being connected to the negative terminals of the first battery module of each successive group. The number of groups may be selected based on an overall target voltage to be supplied by the battery modules 374₁₋ₓ and the voltages of each respective module. For example, where each battery module is a 420V battery module, three groups may be used to provide a voltage of 1260V, four groups may be used to provide a voltage of 1680V, and so forth.

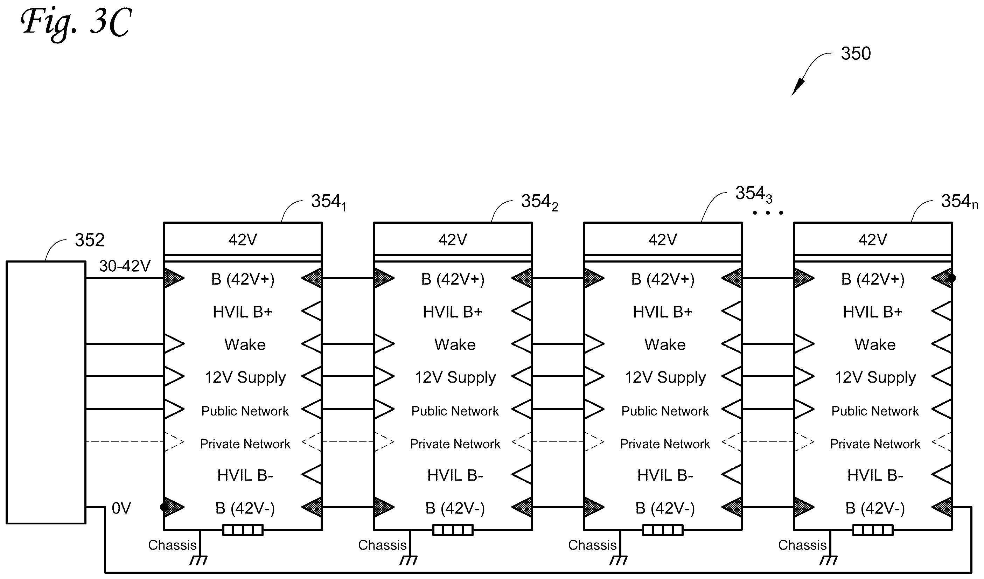

FIG. 3C illustrates an architecture of a battery system according to an embodiment. Battery system 350 includes a load 352 and a plurality of battery modules 354₁₋ₙ configured to supply power to load 352. Each of the battery modules 3541-n may be, as a non-limiting example, a low-voltage battery module such as the battery module 200B as described above and shown in FIG. 2B. The battery modules 354₁₋ₙ are connected to the load such that the positive terminal of a first battery module 354₁ of the plurality is connected to the load 352, a negative terminal of the final battery module 354ₙ of the plurality is connected to the load, and otherwise the battery modules 354₁₋ₙ are connected in parallel with one another. All other connections of the battery modules 354₁₋ₙ such as public CAN bus 292, private CAN bus 294, battery wake, BMS power supply, are, *e.g.,* daisy chained across battery packs 310A - 310N.

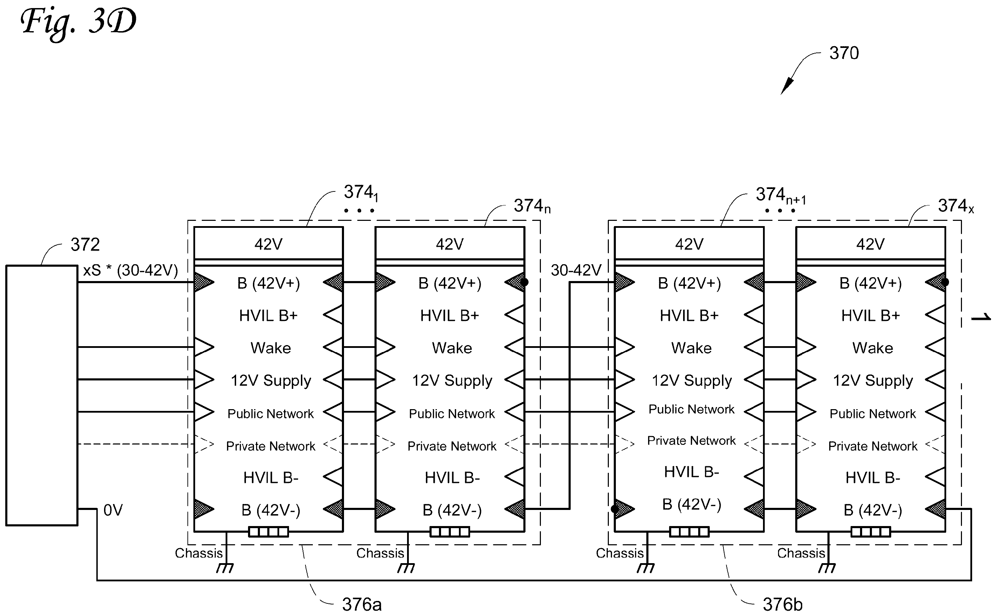

FIG. 3D illustrates an architecture of a battery system according to an embodiment. Battery system 370 includes a load 372 and a plurality of battery modules 374₁₋ₓ configured to supply power to the load 372. Each of the battery modules 374₁₋ₓ may be, as a non-limiting example, a low-voltage battery module such as the battery module 200B as described above and shown in FIG. 2B. In the embodiment shown in FIG. 3D, the plurality of battery modules 374₁₋ₓ may be divided into a plurality of groups 376a,b, each group including at least one battery module. In an embodiment, the number of batteries in each group is equal, for example where first group 376a includes battery modules 1 to n, second group 376b includes battery modules n+1 to n+n. A positive terminal of first battery module 374₁ of the first group 376a may be connected to load 372. Other battery modules within the first group 376a may be connected to one another in parallel. A negative terminal of final battery module 374ₙ of the first group 376a may be connected to the positive terminal of the first battery module 374ₙ₊₁ of the second group 376b. A negative terminal of the final battery module 374ₓ of the second group 376b may be connected to load 372. Other battery modules within the second group 376b may be connected to one another in parallel. All other connections of the battery modules 374₁₋ₓ such as battery wake, BMS power supply, public data connections, and/or private data connections may be, for example, daisy chained across battery modules 374₁₋ₓ. When the battery modules 374₁₋ₓ are each 42V battery modules, the connections shown in FIG. 3D for battery system 370 may provide load 372 with a voltage of 84V. It is understood that while FIG. 3D includes two groups 376a,b, additional groups may be provided with the positive terminals of the final battery module of each group being connected to the negative terminals of the first battery module of each successive group. The number of groups may be selected based on an overall target voltage to be supplied by the battery modules 374₁₋ₓ and the voltages of each respective module. For example, where each battery module is a 42V battery module, three groups may be used to provide a voltage of 126V, four groups may be used to provide a voltage of 168V, and so forth.

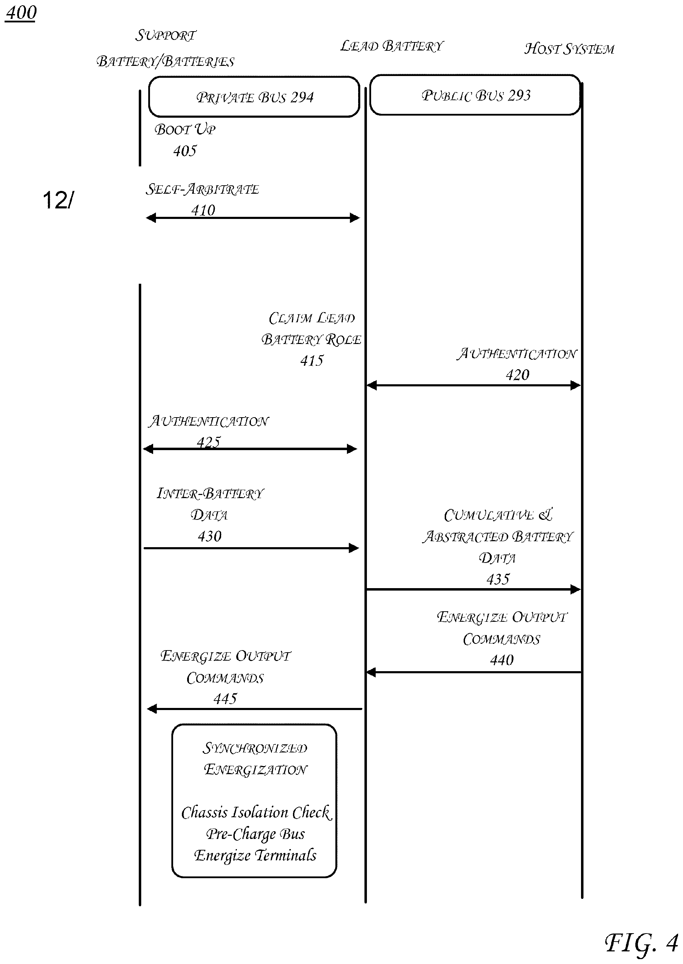

FIG. 4 shows a flow of operations among components of a distributed battery management system for transport climate control, in accordance with at least some of the non-limiting example embodiments described and recited herein. More particularly, FIG. 4 shows an overview of distributed arbitration and data exchange implemented among battery system 350 in FIGS. 3A and 3C, which include battery modules 354, and battery system 370 in FIGS. 3B and 3D, which include battery modules 374. In describing FIG. 4, reference is made to the non-limiting example embodiments shown in, and described with reference to, FIGS. 1 - 3.

Unless context otherwise requires, battery systems 350 and 370 will hereafter be referenced as a battery system; and battery modules 354 and 374 will hereafter be referenced as a battery module.

At 405, a load, *i.e.,* TCS or a charger (not shown), boots up and a low-level voltage power supply, *e.g.,* 12V, is transmitted to each battery module via a general-purpose input/output port.

At 410, distributed arbitration among battery modules commences, and each awakened module transmits self-identifying information on the private network connection for access by all other awakened battery modules. The self-identifying information includes, as non-limiting examples, a serial number or other alpha-numeric identifier provided by the manufacturer thereof. The self-identifying information for each battery module may be stored in any component of a battery management system.

Accordingly, each awakened battery module sends the self-identifying information stored by the battery management system, via the private network connection node, on the private network connection to be received by all other awakened battery modules, also via the private network connection node.

At 415, in accordance with a predetermined protocol, one battery module is able to claim the lead battery role based on a comparison of self-identifying information from each of the awakened battery modules. The comparison performed by a battery management system of each respective one of the awakened battery modules may result in a sequential listing of the identifiers for all of the awakened battery modules.

Accordingly, at the battery management system, a comparison is made of all battery module identifiers received from all of the other awakened battery modules as well as the identifier of the respective receiving battery module. The respective battery management system performs the comparison, compiles the sequential listing of identifiers, and, when appropriate, transmits a message via the private network connection node to the private network connection that the respective battery module is the lead battery module by virtue of meeting a criterion established by the predetermined protocol. Non-limiting example embodiments may include, but not be limited to, having either the highest or the lowest serial number or alphanumeric identifier, having an identifier indicating that the respective battery module is the most recently manufactured, *etc.*

Each of the awakened battery modules stores and maintains the sequential listing of identifiers of all of the awakened battery modules, ordered in accordance with the predetermined protocol. Thus, each of the awakened battery modules is informed of its respective place in the sequence.

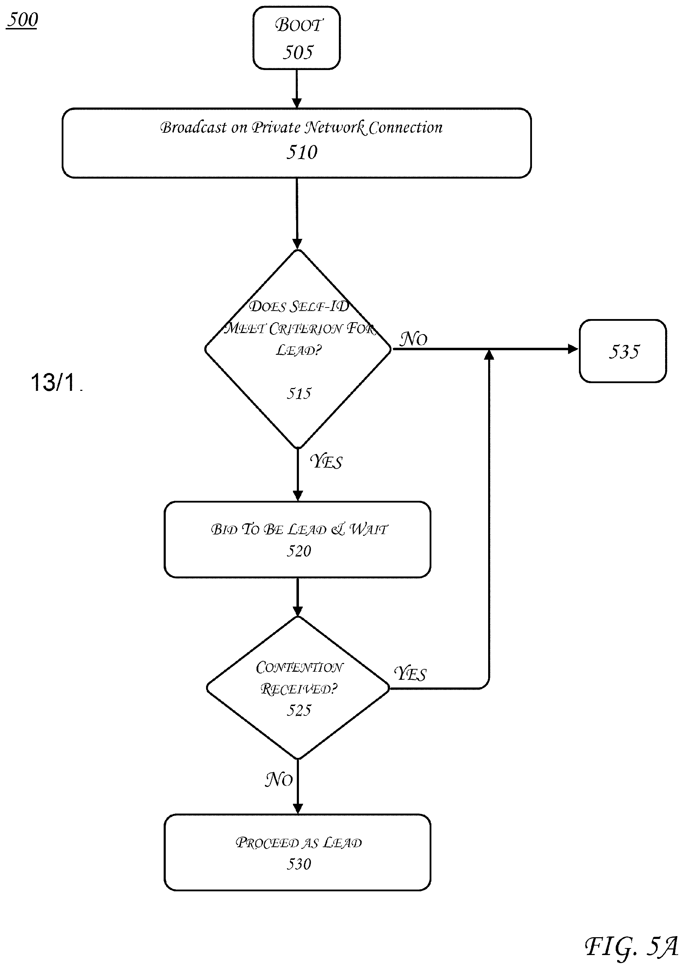

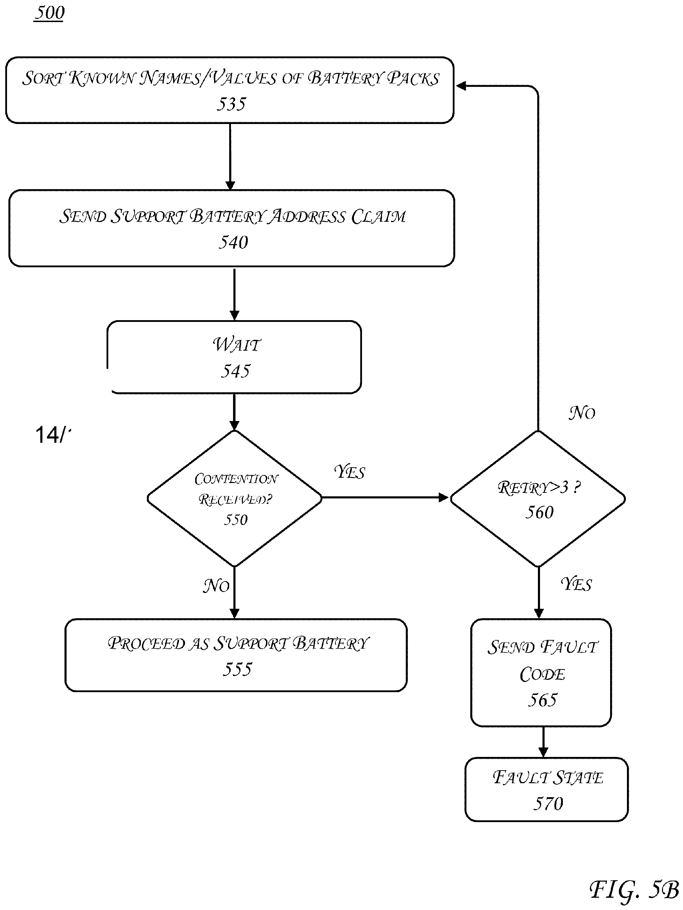

Avoidance of data collision, *i.e.,* contention, particularly on the public network connection will be described further below regarding FIGS. 5A and 5B.

Authentication, as disclosed and recited herein, is implemented to ensure that the battery modules are genuine and/or that they are compatible for operation in the overall system. Compatibility may be authenticated in terms of one or more factors including, but not limited to voltage, branding, *etc.*

Authentication may be implemented by utilizing various cryptographic protocols including, but not limited to, *e.g.,* SHA, MD5, *etc.,* that generally require a common private key for corresponding nodes. A non-limiting example of authentication follows.

At 420, authentication is exchanged between the lead battery module and the load. That is, the lead battery module transmits an indicator, via the public network connection node to the public network connection, informing the load, *e.g.,* TSC, of its lead status; and the load reciprocates by transmitting an acknowledgement via the public network connection to at least the lead battery module.

At 425, the lead battery module authenticates its leader status with all of the other awakened battery modules via the private network connection, and acknowledgement is returned via the private network connection.

At 430, each of the awakened battery modules transmits status information of the respective battery module to the lead battery module. As non-limiting examples, the awakened battery modules may transmit charge status information, charge limits, sensor data, historical performance data, error codes, *etc.* The status information data is transmitted from each of the respective battery modules to the lead battery module via the private network connection.

At 435, the lead battery module transmits to the load, via the public network connection, cumulative and abstracted battery data from all of the other awakened battery modules. That is, the lead battery module communicates on behalf of all of the awakened battery modules, via the public network connection, which reduces communication traffic on the public network connection to facilitate more robust communication between the load and other non-battery components.

At 440, assuming all battery conditions are acceptable, the load transmits to the lead battery module, via the public network connection, energize output commands.

At 445, the lead battery module transmits to the remainder of the awakened battery modules, via the private network connection, the same energize output commands.

Subsequently, all of the awakened battery modules, including the lead battery module, perform a synchronized energization process, which includes, at least, a chassis isolation check, pre-charging of a high-voltage bus, and energizing of the respective battery modules.

The chassis isolation check includes each of the respective awakened battery modules, including the lead battery module, measuring its respective resistance to the chassis. Thus, chassis isolation measurement circuit checks that there is a minimum resistance of, *e.g.,* 500 Ω/V to ensure that the chassis is isolated from the terminals of the respective battery module.

The chassis isolation check for the respective awakened battery modules is performed sequentially in accordance with the sequence determined during the arbitration process, so that the readings do not overlap and resistance is not inadvertently added during the check for a respective battery module.

The respective awakened battery modules are then energized after the high-voltage bus has been pre-charged and the respective battery modules transmit to the lead battery module, via the private network connection, that the bus is at or near their respective battery cell voltages, and then a contactor for the respective battery module is then closed to allow full power to proceed through the distributed battery modules.

FIG. 5A shows a flow of operations for dynamic address claim arbitration among distributed batteries, in accordance with at least some of the non-limiting example embodiments described and recited herein. FIG. 5B shows a continuation of the flow of operations started in FIG. 5A. FIGS. 5A and 5B will hereafter be referenced as FIG. 5, in the composite. In describing FIG. 5, reference is made to the non-limiting example embodiments shown in and described with reference to FIGS. 1 - 4.

In FIG. 5, operations are shown among components of a distributed battery management system for transport climate control, in accordance with at least some of the non-limiting example embodiments described and recited herein. Since communication on the private network connection is based on a two-wire connection between multiple battery modules on the same bus, message/data collisions may occur when a message from two or more battery modules have the same node address, resulting in access delays or even destruction of the intended message. Thus, for implementation of the non-limiting example embodiments of a distributed battery system described and recited herein, a systematic operation for triaging and solving any message contention is provided in FIG. 5.

At 505, a load, *i.e.,* TCS or a charger (not shown), boots up and a low-level voltage power supply, *e.g.,* 12V, is transmitted to the wake port for each battery module.

At 510, each awakened one of battery modules transmits self-identifying information on the private network connection for access by all other awakened battery modules. The self-identifying information includes, as non-limiting examples, a serial number or other alpha-numeric identifier provided by the manufacturer. The self-identifying information for each of battery modules may be stored in any component of the battery management system.

Accordingly, each of the awakened battery modules sends the self-identifying information stored by battery management system 255, via the private network connection node, to the private network connection to be received by all others of the awakened battery modules, also via the private network connection node. As message and/or data contentions are to be avoided, each of awakened battery modules waits for, *e.g.,* 250ms for all other battery modules to send their respective self-identifying information.

At 515, at the battery management system for each awakened battery module, a comparison is made of all battery module identifiers received from all of the other awakened battery modules as well as the identifier of the respective receiving battery module.

At 520, when appropriate following 515, *i.e.,* at least one of the awakened battery modules transmits a message to the other battery modules, via the private network connection node to the private network connection, that the respective battery module is the lead battery module by virtue of meeting a criterion established by the predetermined protocol. Non-limiting example embodiments may include, but not be limited to, having either the highest or the lowest serial number or alphanumeric identifier, having an identifier indicating that the respective battery module is the most recently manufactured, *etc.* Then, again, the battery module waits for, *e.g.,* 250ms any contention to the claim as lead battery module.

At 525, if no contention is received after the waiting period, the respective battery module proceeds as the lead battery module for the distributed configuration.

However, if at 515 the respective battery module does not self-identify as meeting the criterion for being the lead battery module, at 535 the battery module compiles the sequential listing of identifiers and orders itself among all of the awakened battery modules in accordance with the criterion established by the predetermined protocol.

At 540, the awakened battery modules that do not claim lead battery module status send their support battery address claims to the other battery modules, via the private network connection. That is, based on the respective battery modules' place is the sequential listing of identifiers, each of the non-lead battery modules send their respective claim for support to the other awakened battery modules.

**In** accordance with network connection bus protocols, *e.g.,* CAN, every transmission from a node includes at least a unique node address that allows the node to be registered quickly by a destination node and to facilitate "retry" transmissions if there is a physical message collision or some other message error.

Accordingly, the aforementioned sequential listing based on the respective identifiers and resulting acknowledgement by the respectively battery modules is relevant in the event that a lead battery module becomes inoperable or non-communicative for any reason. Then, the communication role of lead battery module is assumed by the next battery module in the sequential listing, and so on.

At 545, after each of the awakened battery modules transmits its respective claim for battery support, the battery modules wait for, *e.g.,* 250ms, for any contention to the respective status claims. However, the claims themselves may be transmitted without having to wait.

If it is determined at 550 that no contention has been received, the awakened battery modules proceed with their assumed communicative roles at 555.

However, if it is determined at 550 that a contention has been received, *i.e.,* there is a collision of messages or data on the private network connection, *i.e.,* a conflict for a common node address, the awakened battery modules that do not claim lead battery module status revert to 535 to re-compile the sequential listing of identifiers for all awakened battery modules and order the respective battery modules among the others in accordance with the criterion established by the predetermined protocol. Retry 560 is repeated a set number, *e.g.*, three, of times until no contention is detected. However, if after the predetermined number of contentions remain after the retry limit is met, then a fault code is transmitted 565 via the private network connection, and the awakened battery modules assume a fault state 570 requiring resolution.

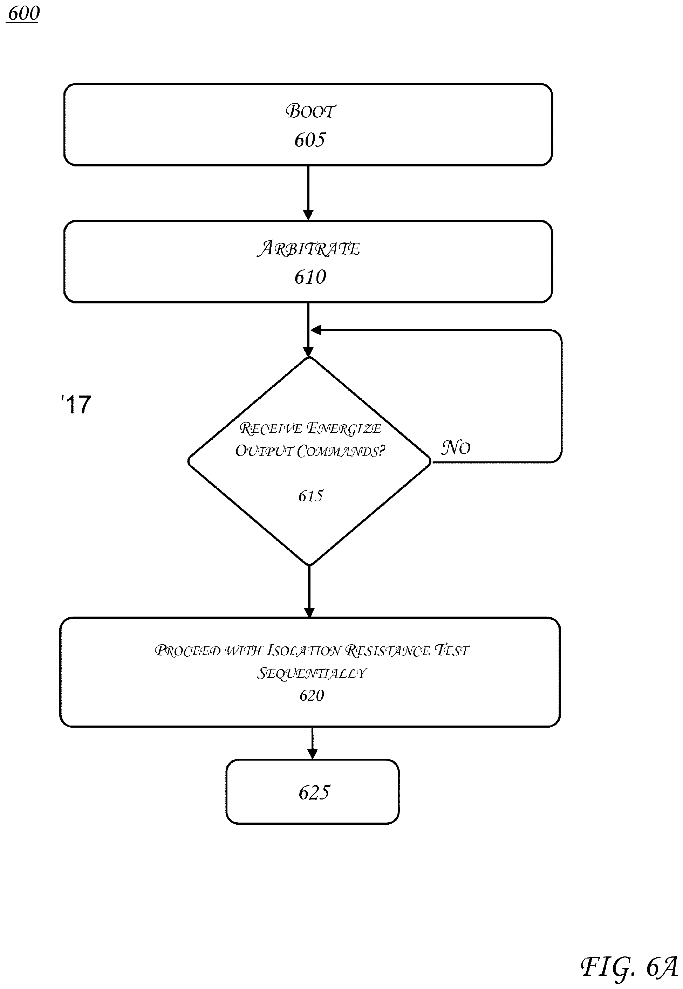

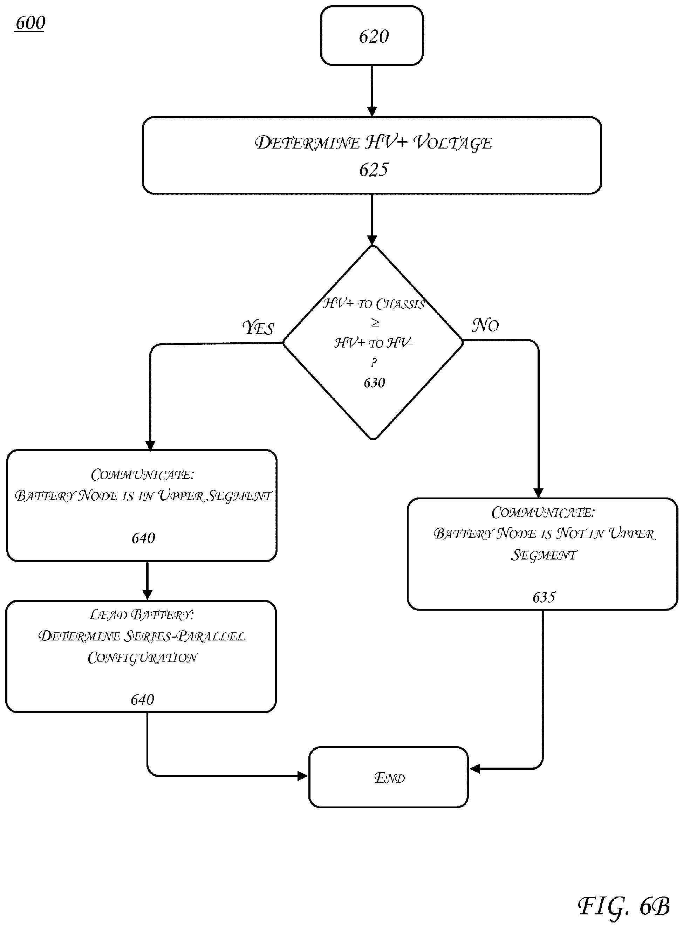

FIG. 6A shows a flow of operations for determining a conductive configuration of distributed batteries, in accordance with at least some of the non-limiting example embodiments described and recited herein. FIG. 6B shows a continuation of the flow of operations started in FIG. 6A. FIGS. 6A and 6B will hereafter be referenced as FIG. 6, in the composite. In describing FIG. 6, reference is made to the non-limiting example embodiments shown in and described with reference to FIGS. 1 - 4.

At 605, a load, *i.e.,* TCS or a charger (not shown), boots up and a low-level voltage power supply, *e.g.,* 12V, is transmitted to the wake port for each battery module.

At 610, the awakened battery modules arbitrate, as has been described previously. That is, each awakened one of battery modules transmits self-identifying information on the private network connection for access by all other awakened battery modules. The self-identifying information includes, as non-limiting examples, a serial number or other alpha-numeric identifier provided by the manufacturer. The self-identifying information for each of battery modules may be stored in any component of the battery management system.

At 615, the lead battery module among awakened battery modules continuously checks for an energize output command from the load. An energize output command is a demand for power from, *e.g.,* the TSC or other corresponding component.

At 620, upon receiving an energize output command, the lead battery module transmits the energize output command via the private network connection, either to all of the awakened battery modules, in accordance with at least one non-limiting example embodiment, but at least to the next awakened battery module in accordance with the stored sequence of battery modules in compliance with the predetermined protocol. That is, as stated previously, when the energize output command is output and received at respective battery modules, each awakened battery module executes or performs self-monitoring by which the respective battery module measures its resistance to the chassis to which the battery module is attached or otherwise corresponds. However, as also stated previously, the chassis isolation check for each of the respective awakened battery modules is performed sequentially in accordance with the sequence determined during the arbitration process, so that the readings do not overlap and resistance is not inadvertently added during the check for a respective battery module. Therefore, at 620, each awakened battery module is to wait until the preceding awakened battery module indicates that the isolation check at that preceding battery module has been completed before performing its own isolation check. Upon completion of its own isolation check, each awakened battery module transmits a completion message to at least the lead battery module via the private network connection. The lead battery module then instructs the subsequent battery module to perform an isolation check.

At 620, as part of the isolation check at each of the respective awakened battery modules, a resistance test is executed from the high voltage port HV+ to chassis and from the HV- to chassis.

At 625, the HV+ voltage to chassis is determined so that the lead battery module may provide a complete picture of the system voltage. This cannot be done without crowdsourcing the HV+ to chassis measurement from each battery in the system. With that crowdsourced information, the lead battery module may then also see the overall series-parallel configuration and detect missing module faults (the number of modules in each series group must be the same).

At 630, it is determined whether the HV+ voltage to chassis is greater than the HV+ to HV- for the respective one of battery modules that is executing an isolation check.

At 635, if HV+ to chassis < HV+ to HV- for any of the awakened battery modules that executes an isolation check, the lead battery module informs all of the awakened battery modules that the tested battery module is not in the upper segment of the series configuration.

At 640, if HV+ to chassis ≥ HV+ to HV- for any of the awakened battery modules that executes an isolation check, the lead battery module informs all of the awakened battery modules that the tested battery module is in an upper segment of the series configuration.

At 645, upon execution of the isolation check for all of the awakened battery modules, knowing which of the awakened battery modules is in the upper segments of the series configuration, the lead battery modules determine the exact series-to-parallel configuration for all of the awakened battery modules in the distributed configuration and the overall system voltage.

From the foregoing, it will be appreciated that various embodiments of the present disclosure have been described herein for purposes of illustration, and that various modifications may be made without departing from the scope and spirit of the present disclosure. Accordingly, the various embodiments disclosed herein are not intended to be limiting, with the true scope and spirit being indicated by the following claims.

### ASPECTS

Aspect 1. A distributed battery management system, comprising:
plural battery modules attached to a chassis,
wherein respectively, the plural battery modules are each configured to:
   activate upon activation of a load,
   exchange self-identifying information with others of the plural battery modules to identify a lead battery module from among the plural battery modules,
   exchange internal and performance-related data with the others of the plural battery modules;
wherein the lead battery module is configured to:
   identify as the lead battery module, from among the plural battery modules, to the load,
   transmit internal and performance-related data of the plural battery modules to the load,
   coordinate collective power distribution from the plural battery modules.

Aspect 2. The distributed battery management system of Aspect 1, wherein the self-identifying information exchanged by each of the plural battery modules is a serial number.

Aspect 3. The distributed battery management system of Aspect 1 or Aspect 2, wherein the self-identifying information exchanged by each of the plural battery modules is a manufacturing identifier.

Aspect 4. The distributed battery management system of any of Aspect 1 - 3, wherein the internal and performance-related data of the plural battery modules transmitted by the lead battery module includes one or more of state of charge data, sensor data, faults, or historical performance data.

Aspect 5. The distributed battery management system of any of Aspect 1 - 4, wherein the plural battery modules are conductively connected to each other in parallel.

Aspect 6. The distributed battery management system of any of Aspects 1 - 4, wherein the plural battery modules are conductively connected to each in series and parallel.

Aspect 7. The distributed battery management system of any of Aspect 1 - 6, wherein the plural battery modules are conductively connected to each other in series.

Aspect 8. The distributed battery management system of any of Aspect 1 - 7, wherein the lead battery module is further configured to relay output commands from the load to the others of the plural battery modules to output power.

Aspect 9. The distributed battery management system of any of Aspect 1 - 8, wherein the plural battery modules exchange the self-identifying information and exchange internal and performance-related data via a private network bus.

Aspect 10. The distributed battery management system of any of Aspect 1 - 9, wherein the lead battery module identifies as the lead battery module to the load, transmits internal and performance-related data of the plural battery modules to the load, and coordinates collective power distribution from the plural battery modules via a public network bus.

Aspect 11. The distributed battery management system of Claim 1, wherein the load is a transport climate control system (TCS).

Aspect 11. A battery module, comprising:
a receptor to a private network connection, wherein
   self-identifying information is transmitted to at least one other battery module via the private network connection,
   identifying information from the at least one other battery module is received via the private network connection,
   internal and performance-related data regarding the battery module is transmitted to at least one other battery module via the private network connection,
   internal and performance-related data regarding the at least one other battery module is received via the private network connection; and
a receptor to a public network connection.

Aspect 12, the battery module of Aspect 11, wherein the self-identifying information exchanged by each of the plural battery modules is a serial number.

Aspect 13. The battery module of Aspect 11, wherein the self-identifying information of the battery module and the identifying information from the at least one other battery module are, respectively, manufacturing identifiers.

Aspect 14. The battery module of any one of Aspect 11 - 13, wherein the battery module is configured to arbitrate with the at least one other battery module, based on the transmitted self-identifying information and the received identifying information, to identify as a follower battery module to a lead battery module.

Aspect 15. The battery module of any one of Aspects 11 - 14, wherein the battery module is configured to arbitrate with the at least one other battery module, based on the transmitted self-identifying information and the received identifying information, to identify as a lead battery module to a load.

Aspect 16. The battery module of Aspects 15, wherein the battery module is further configured to coordinate collective power distribution from the plural battery modules via the public network connection.

Aspect 17. The battery module of Aspects 15 or 16, wherein the battery module is further configured to transmit to the load, via the public network connection, the internal and performance-related data regarding the battery module and the at least one other battery module.

Aspect 18. The battery module of any one of Aspects 15 - 17, wherein the internal and performance-related data includes one or more of state of charge data, sensor data, faults, or historical performance data.

Aspect 19. The battery module of any one of Aspects 15 - 18, wherein the battery module is further configured to relay output commands from the load to the at least one other battery module to output power.

Aspect 20. The battery module of any one of Aspects 15 - 19, wherein the load is a transport climate control system (TCS).

The battery module of Aspect 11 may otherwise be defined as being configured to transmit self-identifying information to at least one other battery module via the private network connection; receive identifying information from the at least one other battery module is received via the private network connection; transmit internal and performance-related data regarding the battery module is transmitted to at least one other battery module via the private network connection; and receive internal and performance-related data regarding the at least one other battery module is received via the private network connection.

The battery module of any one of Aspects 11-20 may be configured for use in a distributed battery management system in accordance with any one of Aspects 1-10, and likewise a distributed battery management system in accordance with any one of Aspects 1-10 may comprise a battery module in accordance with any one of Aspects 11-20.

## Claims

1. A distributed battery management system, comprising:
plural battery modules attached to a chassis,
wherein respectively, the plural battery modules are each configured to:
activate upon activation of a load,
exchange self-identifying information with others of the plural battery modules to identify a lead battery module from among the plural battery modules, and
exchange internal and performance-related data with the others of the plural battery modules;
wherein the lead battery module is configured to:
identify as the lead battery module, from among the plural battery modules, to the load,
transmit internal and performance-related data of all the plural battery modules to the load, and
coordinate collective power distribution from the plural battery modules.

2. The distributed battery management system of Claim 1, wherein the self-identifying information exchanged by each of the plural battery modules is at least one of a serial number and a manufacturing identifier, and/or
wherein the internal and performance-related data of the plural battery modules transmitted by the lead battery module includes one or more of charge status data, sensor data, faults, or historical performance data.

3. The distributed battery management system of any one of Claims land 2, wherein the plural battery modules are conductively connected to each other in parallel.

4. The distributed battery management system of any one of Claims 1-3, wherein the lead battery module is further configured to relay output commands from the load to the others of the plural battery modules to output power.

5. The distributed battery management system of any one of Claims 1-4, wherein the exchange of self-identifying information and the exchange of internal and performance-related data among the plural battery modules is conducted via a private network bus.

6. The distributed battery management system of any one of Claims 1-5, wherein the lead battery module identifies as the lead battery module to the load, transmits internal and performance-related data of the plural battery modules to the load, and coordinates collective power distribution from the plural battery modules via a public network bus.

7. The distributed battery management system of any one of Claims 1-6, wherein the load is a transport climate control system (TCS).

8. A battery module, comprising:
a receptor to a private network connection;
wherein the battery module is configured to:
transmit self-identifying information to at least one other battery module via the private network connection,
receive identifying information from the at least one other battery module via the private network connection,
transmit internal and performance-related data regarding the battery module to at least one other battery module via the private network connection;
receive internal and performance-related data regarding the at least one other battery module via the private network connection; and
a receptor to a public network connection.

9. The battery module of Claim 8, wherein the self-identifying information exchanged by the battery module is at least one of a serial number and a manufacturing identifier.

10. The battery module of any one of Claims 8 and 9, wherein the battery module is configured to arbitrate with the at least one other battery module, based on the transmitted self-identifying information and the received identifying information, to identify as a follower battery module to a lead battery module.

11. The battery module of any one of Claims 8-10, wherein the battery module is configured to arbitrate with the at least one other battery module, based on the transmitted self-identifying information and the received identifying information, to identify as a lead battery module to a load, and optionally
wherein the load is a transport climate control system (TCS).

12. The battery module of any one of Claims 8-11, wherein the battery module is further configured to coordinate collective power distribution from plural battery modules via the public network connection.

13. The battery module of any one of Claims 8-12, wherein the battery module is further configured to transmit to the load, via the public network connection, the internal and performance-related data regarding the battery module and the at least one other battery module.

14. The battery module of any one of Claims 8-13, wherein the internal and performance-related data includes one or more of charge status data, sensor data, faults, or historical performance data.

15. The battery module of any one of Claims 8-14, wherein the battery module is further configured to relay output commands from the load to the at least one other battery module to output power.
